Europäisches Patentamt

European Patent Office

Office européen des brevets

(11) Numéro de publication: **0 243 219**
**A1**

## DEMANDE DE BREVET EUROPEEN

(21) Numéro de dépôt: 87400611.7

(22) Date de dépôt: 19.03.87

(51) Int. Cl.⁴: **C 08 L 75/08**
**H 01 B 3/30**
**//(C08L75/08,33:08)**

(30) Priorité: 20.03.86 FR 8603980

(43) Date de publication de la demande:
28.10.87 Bulletin 87/44

(84) Etats contractants désignés: **BE DE GB IT NL**

(71) Demandeur: **MANUFACTURE DE PRODUITS CHIMIQUES PROTEX Société anonyme dite:**
**2, place Joffre**
**F-75007 Paris Seine (FR)**

(72) Inventeur: **Hayes, Richard**
**29 Rue Saint Oustrille**
**F-41800 Montoire (FR)**

**Henny, Jean Daniel**
**111 Avenue des Montils**
**F-37400 Amboise (FR)**

(74) Mandataire: **Colas, Jean-Pierre et al**
**Cabinet de Boisse 37, avenue Franklin D. Roosevelt**
**F-75008 Paris (FR)**

(54) Formulations améliorées de polyuréthanes compacts à taux minimal de défauts.

(57) L'invention se rapporte aux polyuréthanes.

Elle concerne une composition de polyuréthane convenant à la production d'articles en polyuréthane présentant une proportion réduite de bulles incluses, qui comprend, sous forme de constituants séparés devant être mélangés au moment de l'emploi :

(a) un constituant polyol comprenant au moins un diol ou un polyol contenant des unités choisies dans le groupe formé par les unités oxyéthylène et oxypropylène et ayant une fonctionnalité comprise entre 2 et 5 inclusivement, au moins 5% en poids de la totalité du ou des polyol(s) présent(s) dans la composition étant constitués par des unités oxyéthylène, et

(b) un constituant polyisocyanate comprenant au moins un polyisocyanate,

caractérisée en ce que le constituant (a) contient une proportion efficace du point de vue de l'élimination des bulles d'un polymère ou copolymère d'acrylate d'alkyle.

Utilisation notamment dans le domaine de l'électrotechnique et de l'électronique.

## Description

<u>Formulations améliorées de polyuréthanes compacts à taux minimal de défauts</u>

La présente invention concerne une composition destinée à la préparation de polyuréthanes contenant un polymère ou copolymère acrylique comme agent de débullage.

La préparation de polyuréthanes non cellulaires à partir de mélanges à base de polyisocyanates et de polyétherpolyols a été entre autres, décrite dans les monographies de J.H. SAUNDERS et K.C. FISH, High Polymers, Vol XVI. Polyuréthanes 1ère et 2ème parties, Interscience Publisher, New York. 1962 et 1964 et de R. Vieweg et A. Höchtlen, Künstoff. Handbuch, Band VII, Polyuréthane, Carl. Hanser Verlag, München 1966.

Les polyétherpolyols, en particulier ceux à base d'oxyde de polypropylène, présentent un grand intérêt pratique du fait de leur coût réduit par rapport aux polyesters polyols et par rapport à d'autres polyétherpolyols obtenus à partir de polybutadiène, de polycaprolactones ou autres. De plus, ils confèrent aux polyuréthanes de bonnes propriétés mécaniques et une résistance satisfaisante à l'hydrolyse et à la chaleur.

Divers brevets récents, comme US-A-4 385 133, US-A-4 376 834, DE-A-3 137 132, DE-A-3 219 759 et DE-A-3 219 822, décrivent des polyuréthanes formés à partir d'un polyétherpolyol contenant des unités polyoxyéthylène et/ou polyoxypropylène. Toutefois, aucun d'eux ne mentionne le problème de l'élimination des défauts (bulles) d'une masse de résine de polyuréthane bien que cette question revête un grand intérêt pour la fabrication de pièces devant être soumises en service à des contraintes électriques ou mécaniques importantes.

Afin de favoriser l'élimination des bulles par un traitement sous vide d'une masse de résine de polyuréthane avant la mise en forme de celle-ci, il est connu d'ajouter à la résine polyuréthane un agent tensio-actif du type silicone. Ce dernier présente, toutefois, l'inconvénient d'être coûteux et de réduire l'adhésion de la résine polyuréthane sur des substrats métalliques lorsqu'on l'utilise aux concentrations où il est efficace.

L'invention vise à fournir une composition de polyuréthane convenant à la production d'articles en polyuréthane compacts présentant une proportion réduite de bulles incluses.

Plus précisément, l'invention concerne une composition de polyuréthane convenant à la production d'articles en polyuréthane présentant une proportion réduite de bulles incluses, qui comprend, sous forme de constituants séparés devant être mélangés au moment de l'emploi :

(a) un constituant polyol comprenant au moins un diol ou un polyol contenant des unités choisies dans le groupe formé par les unités oxypropylène et oxyéthylène et ayant une fonctionnalité comprise entre 2 et 5 inclusivement, au moins 5% en poids de la totalité du ou des polyol(s) présent(s) dans la composition étant constitués par des unités oxyéthylène, et

(b) un constituant polyisocyanate comprenant au moins un polyisocyanate,

caractérisée en ce que le constituant (a) contient une proportion efficace du point de vue de l'élimination des bulles d'un polymère ou copolymère d'acrylate d'alkyle.

De façon surprenante, il a été trouvé que les polyétherpolyols utilisés pour la fabrication de polyuréthanes par réaction avec des diisocyanates, étaient compatibles avec des polymères ou copolymères d'acrylate d'alkyle lorsque ces polyétherpolyols comportaient un certain taux minimum d'oxyde d'éthylène et que les polymères ou copolymères d'acrylate d'alkyle facilitaient le débullage de la composition résultante.

Cette compatibilité est surprenante car les polyols contenant seulement des unités oxypropylène ne sont pas compatibles avec les polymères ou copolymères d'acrylate d'alkyle, ce qui peut être aisément vérifié par ajout de 0,1 ; 0,5 ; 1 et 2% en poids d'un copolymère d'acrylate d'alkyle à un polyol contenant seulement des unités oxypropylène. On constate que la disparition des bulles est d'autant plus difficile que la concentration en copolymère d'acrylate d'alkyle est plus importante. C'est encore le polyol sans aucun ajout, qui présente le meilleur comportement, mais qui reste, cependant, loin d'être satisfaisant.

Au contraire, les compositions de l'invention sont facilement et rapidement débullées par un traitement sous vide si bien qu'il devient possible de travailler avec des compositions ayant une durée de vie en pot de l'ordre de 30 minutes ou même moins. Ceci constitue un avantage pratique très appréciable, qui s'ajoute à la qualité des articles obtenus. Le débullage peut s'effectuer en plaçant la matière sous un vide de quelques millimètres de mercure pendant quelques minutes, avec ou sans agitation. Compte tenu de la durée de vie en pot limitée des compositions après mélange des constituants, il y a souvent avantage à débuller les constituants avant leur mélange, puis à débuller une nouvelle fois après leur mélange, ce dernier débullage étant alors plus bref que si on n'effectuait qu'un seul débullage après mélange.

La proportion efficace de polymère ou copolymère d'acrylate d'alkyle à ajouter comme additif de débullage sera généralement comprise entre 0,001 et 5% du poids du ou des polyol(s) totaux présents dans la composition. La proportion de polymère ou copolymère à ajouter comme additif de débullage pour obtenir la meilleure efficacité dépendra de la composition de polyuréthane particulière dont il s'agira et notamment de sa teneur en charge. Habituellement, on utilisera au moins 0,1% en poids de l'additif car en dessous de cette proportion l'action de débullage risque d'être trop faible, et au plus 2% en poids de l'additif car des proportions supérieures ne fournissent pas des résultats sensiblement meilleurs et ne sont donc pas économiquement intéressants. En outre, des proportions d'additif supérieures à 2% en poids peuvent donner au polyuréthane un caractère thermoplastique qui peut être indésirable, tout au moins dans certaines applications. On préférera ajouter 0,5 à 2% du poids d'additif dans la majeure partie des cas.

Des polymères ou copolymères d'acrylate d'alkyle sont, par exemple, constitués de 50 à 100% en poids d'un acrylate d'alkyle dont le radical alkyle, linéaire ou ramifié, contient 4 à 12 atomes de carbone, et de 0 à 50% en poids d'un acrylate d'alkyle dont le radical alkyle, linéaire ou ramifié, contient 1 à 3 atomes de carbone, et ont un poids moléculaire dans la gamme de 2500 à 15000. De préférence le radical alkyle le plus long est en C8 et le radical alkyle le plus court est en C2. Des monomères acrylates utilisables dans la préparation de ces polymères et monomères sont, par exemple, l'acrylate de méthyle, l'acrylate d'éthyle, l'acrylate de propyle, l'acrylate de butyle, l'acrylate de t-butyle, l'acrylate de pentyle, l'acrylate d'hexyle, l'acrylate d'heptyle, l'acrylate d'octyle, l'acrylate de 2-éthylhexyle, l'acrylate de décyle, l'acrylate de lauryle et l'acrylate de dodécyle.

Le constituant polyol (a) comprend au moins un polyol ou diol contenant des unités choisies dans le groupe formé par les unités oxyéthylène et oxypropylène et ayant une fonctionnalité (nombre de groupes -OH par molécule) de 2 à 5. Ce polyol doit contenir une proportion d'unités oxyéthylène telle qu'elles forment au moins 5% du poids de la totalité du ou des polyol(s) présent(s) dans la composition. La proportion d'unités oxyéthylène est d'au moins 5% car en dessous de cette valeur on ne note que peu ou pas d'amélioration de l'aptitude au débullage. Au-delà d'une proportion d'environ 12% en poids d'unités oxyéthylène, les polyuréthanes résultants présenteront un caractère hydrophile qui est gênant pour les applications sous tension électrique. Ce caractère hydrophile s'accompagne notamment d'un gonflement important, surtout dans le cas de polyuréthanes élastomères, et aussi d'une chute de la résistivité transversale du matériau. Ce caractère hydrophile peut, toutefois, être intéressant dans d'autres applications et, en conséquence, la présence de plus de 12% en poids d'unités oxyéthylène restent dans le cadre de la présente invention. A la limite, il peut n'y avoir que des unités oxyéthylène, à l'exclusion d'unités oxypropylène.

Des polyols utilisables dans le constituant (a) sont, par exemple, des polyols d'une fonctionnalité de plus de 2 à 5, dérivés, par exemple de glycérol, de triméthylol propane, de 1,2,6-hexanetriol, de pentaérythrol, de butanetriol-1,2,4, de sorbitol, de 4,4'-dihydroxy-diphénylpropane ou de diamines aliphatiques, cycloaliphatiques ou aromatiques, et d'oxyde de propylène, copolymérisés ou coiffés avec de l'oxyde d'éthylène de façon que la proportion d'oxyde d'éthylène représente au moins 5% des polyols totaux et que le polyol ait une masse moléculaire moyenne comprise dans la gamme de 180 à 20 000.

D'autres polyols utilisables dans le constituant (a) sont des diols du type poly(oxyalkylène)glycol d'une masse moléculaire moyenne de 200 à 20 000, dans lesquels les unités oxyalkylène sont des unités oxypropylène et oxyéthylène et contiennent suffisamment d'unités oxyéthylène pour que celles-ci constituent au moins 5% en poids de polyols totaux présents. Les unités oxyéthylène sont, de préférence situées aux extrémités de la chaîne alkylène, mais cela n'est pas essentiel.

Ces diols, polyols ou leurs mélanges constituent de 5 à 100% en poids du constituant (a).

Des mélanges des polyols et diols susdécrits sont préférés. Des mélanges en toutes proportions sont utiles, mais on préfère ceux contenant au moins 10% en poids de polyols sur la base des diols et polyols oxyalkyléniques totaux.

Le constituant (a) peut contenir, outre les polyols et diols oxyalkyléniques sus-mentionnés, un allongeur de chaîne choisi, par exemple, parmi les diols de 3 à 10 atomes de carbone, tels que le butane-diol-1,3, l'hexane-diol-1,6, des triols tels que la glycérine, le triméthylol propane, l'huile de ricin ou des mono- et polyamines primaires et secondaires, aliphatiques, cyclo aliphatiques ou aromatiques, telles que notamment le 4,4'-diaminophénylméthane, les isomères de la diéthyltoluylène-diamine, l'éthylène-diamine, et l'isophorone-diamine. L'allongeur de chaîne constituera normalement de 0 à 50% du poids du constituant (a).

Le constituant (a) peut aussi contenir un accélérateur de polymérisation. Des exemples d'accélérateurs sont des amines tertiaires organiques comme la benzyl-diméthylamine, le tris-diméthyl-amino-méthylphénol, le 1,4-diazon bicyclo (2,2,2)octane, la triéthanolamine ; des hydroxydes de métaux alcalins, ainsi que des composés organométalliques, notamment ceux du plomb, de l'étain, et du mercure, en particulier le dilaurate de dibutyl-étain, l'octoate d'étain, l'octoate de plomb, le propionate de mercure, et l'acétate de phényl-mercure. L'accélérateur de polymérisation constituera habituellement 0 à 2% du poids du constituant (a).

En outre, le constituant (a) peut contenir des plastifiants tels que des phtalates d'alkyle, des agents d'ignifugation tels que des dérivés organiques du phosphore et du brome, ainsi que des pigments, et des charges classiquement utilisées dans les compositions de polyuréthane et bien connues de l'homme de l'art, comme des carbonates, tels que le carbonate de calcium ou la dolomie, de la silice, des silicates, du talc, de l'alumine, de l'oxyde d'antimoine, de l'oxyde de titane et des substances fibreuses. Des charges absorbant l'humidité ou les produits de réaction gazeux soit par absorption physique, comme c'est le cas des tamis moléculaires, soit par réaction chimique comme c'est le cas de la chaux vive et des oxydes basiques, sont avantageusement utilisées dans les compositions. Ces ingrédients facultatifs seront utilisés dans les proportions qui sont usuelles dans le domaine des polyuréthanes.

Le constituant polyisocyanate (b) comprend au moins un polyisocyanate. Habituellement ce polyisocyanate sera utilisé dans des proportions voisines de la stoechiométrie ou supérieures à celle-ci, comme cela est usuel dans le domaine des polyuréthanes. On peut utiliser n'importe quels polyisocyanates connus dans la fabrication des polyuréthanes, par exemple des polyisocyanates aliphatiques, cycloaliphatiques, araliphatiques, aromatiques ou hétérocycliques.

Des exemples spécifiques non limitatifs sont les toluylène diisocyanates (TDI), les diphénylméthane diisocyanates (MDI), le paraphénylène diisocyanate, le cyclohexane diisocyanate, le 1,6-hexaméthylène diisocyanate, et l'isophorone diisocyanate. Bien évidemment, des modifications des isocyanates ci-dessus, tels que carbodiimides, isocyanurates, allophanates, ainsi que des prépolymères résultant de la réaction d'un polyol avec un excès d'isocyanate, sont des variantes possibles.

Dans le cas où un polyol est prépolymérisé avec un isocyanate, le polyol est à considérer dans le calcul de la masse totale des polyols, servant de référence à la détermination du pourcentage d'oxyde d'éthylène dans le constituant polyol (a). Des prépolymères incluant un polyol à base de polyoxypropylène et de polyoxyéthylène, font partie du cadre de l'invention.

Les compositions de l'invention sont particulièrement utiles dans les applications électrotechniques et électroniques où elles facilitent la réalisation d'isolants comportant un minimum de défauts, ce qui permet d'augmenter la tension de fonctionnement ou de réaliser des appareillages plus compacts.

Les compositions de l'invention sont également intéressantes pour faire des coulées dites à moule perdu, où la résine présente le plus souvent une surface libre qui sera obtenue avec un minimum de défauts ou microbulles.

Les exemples non limitatifs suivants sont donnés en vue d'illustrer l'invention.

EXEMPLES 1 à 8

Une série d'échantillons compacts de polyuréthane sont réalisés en mélangeant un composant A et un composant B. Chaque composant A est un mélange de 20g d'un polyol, de masse moléculaire 450, dérivé d'oxyde de propylène et d'un triol, et de 80g d'un diol, d'une masse moléculaire d'environ 2000, dérivé d'oxyde de propylène et comportant 0, 10, 15 ou 20% en poids d'oxyde d'éthylène (OE) selon le cas. Le composant A comporte également, selon le cas, 0 ou 0,5% en poids d'un polymère d'acrylate d'alkyle comportant en moyenne six atomes de C dans la chaîne alkyle et ayant une masse moléculaire d'environ 5000. De la dolomie est ajoutée à raison de 130 g dans chaque composant A de tous les mélanges.

Le composant B est formé de 30g de diphénylméthane diisocyanate technique.

Les composants A sont dégazés sous vide, et la facilité de débullage est notée, puis le mélange est réalisé avec le composant B. Après un nouveau dégazage, des éprouvettes sont coulées et sont soumises à un contrôle d'aspect.

Après un durcissement de 16h à 20°C, suivi d'une cuisson de 1h à 70°C, on détermine la dureté Shore A, la reprise d'humidité, la résistance à la traction et l'allongement à la rupture des éprouvettes. Les résultats obtenus sont rassemblés dans le tableau 1.

On constate que la composition 6, qui contient à la fois 0,5 g de polymère d'acrylate d'alkyle et 80g de diol à 15% d'oxyde d'éthylène, présente la meilleure facilité de débullage avec une reprise d'humidité comparable à celle obtenue avec le diol sans polyoxyéthylène (composition 1). Par contre le diol de la composition 8, qui contient 20% d'oxyde d'éthylène, confère une grande facilité de débullage mais avec une reprise d'humidité nettement supérieure à celles des compositions 1 et 6.

Le tableau 1 ne donne pas les propriétés mécanique des éprouvettes des compositions 2, 3, 4, 5 et 7, du fait de leur porosité trop importante qui ôte toute signification aux résultats.

0 243 219

## TABLEAU 1

| N° de composition | 1 | 2 | 3 | 4 | 5 | 6 | 7 | 8 |
|---|---|---|---|---|---|---|---|---|
| **PARTIE A.** | | | | | | | | |
| Triol | 20 | 20 | 20 | 20 | 20 | 20 | 20 | 20 |
| Diol à 0% d'OE | 80 | 80 | - | - | - | - | - | - |
| Diol à 10% d'OE | - | - | 80 | 80 | - | - | - | - |
| Diol à 15% d'OE | - | - | - | - | 80 | 80 | - | - |
| Diol à 20% d'OE | - | - | - | - | - | - | 80 | 80 |
| Poly(acrylate d'alkyle) | - | 0,5 | - | 0,5 | - | 0,5 | - | 0,5 |
| Dolomie | 130 | 130 | 130 | 130 | 130 | 130 | 130 | 130 |
| **PARTIE B.** | | | | | | | | |
| Diisocyanate | 30 | 30 | 30 | 30 | 30 | 30 | 30 | 30 |
| Taux d'OE dans polyol | 0 | 0 | 8 | 8 | 12 | 12 | 16 | 16 |
| Débullage Partie A | + | - | - | + | - | ++ | - | ++ |
| Aspect après coulée | + | - | - | + | - | ++ | - | ++ |
| Dureté Shore A(1) | 75 | 75 | | | | 85 | | |
| Reprise d'humidité à 20°C (2) | 9,7% | | | | | 10,1% | | 14% |
| Résistance à la traction(2) | $24 daN/cm^2$ | | | | | $28 daN/cm^2$ | | |
| Allongement à la rupture(3) | 110% | | | | | 105% | | |

(1) ASTM D 2240
(2) Eprouvettes 50x50x3mm, reprise d'eau après 3 semaines à 20°C
(3) NFT 46.002
 - = mauvais
 + = médiocre
++ = bon

EXEMPLES 9, 10 et 11

Trois échantillons sont réalisés à partir des formules suivantes réalisées avec les matières premières de l'exemple 1 et avec un polyol à 40% d'oxyde d'éthylène.

## TABLEAU 2

| Exemples | 9 | 10 | 11 |
|---|---|---|---|
| Partie A. | | | |
| Triol | 70 | 70 | 70 |
| Diol à 15% d'OE | 30 | 30 | 0 |
| Diol à 40% d'OE | 0 | 0 | 30 |
| Poly(acrylate d'alkyle) | 0 | 0,5 | 0,5 |
| Dolomie | 130 | 130 | 130 |
| Partie B. | | | |
| Diisocyanate | 70 | 70 | 70 |
| Taux d'OE dans polyol | 4,5 | 4,5 | 12 |
| Débullage partie A | - | + | ++ |
| Résistance à la flexion | | 58 MPa | |
| Reprise d'humidité après 3 semaines à 20°C | | 1,26% | |

On constate que la réduction du taux d'oxyde d'éthylène à 4,5% du polyol donne un comportement lors du débullage peu différent de celui des polyols à base d'oxyde de propylène de l'exemple 1. L'action de l'agent de débullage est en effet peu efficace. L'augmentation à 12% du taux d'oxyde d'éthylène permet d'obtenir une grande facilité de débullage.

EXEMPLES 12 à 14

On prépare trois échantillons supplémentaires ayant la même composition que les exemples 5 et 6 de l'exemple 1 si ce n'est qu'ils contiennent 0,1 ; 1 et 2% de polyacrylate d'alkyle par rapport au total diol + triol. On constate que le comportement au débullage et l'aspect après coulée de la résine polyuréthane, sont un peu plus favorables avec 0,1% de polyacrylate d'alkyle, par rapport à l'exemple 5 (sans additif).

Avec 1 et 2% d'acrylate d'alkyle le comportement est semblable à celui de l'exemple 6 contenant 0,5% d'acrylate d'alkyle par rapport au polyol.

Ces résultats sont récapitulés dans le tableau 3 qui reprend aussi les exemples 5 et 6.

6

## TABLEAU 3

| Exemples | 5 | 12 | 6 | 13 | 14 |
|---|---|---|---|---|---|
| **PARTIE A.** | | | | | |
| Triol | 20 | 20 | 20 | 20 | 20 |
| Diol à 15% d'ŒE | 80 | 80 | 80 | 80 | 80 |
| Polyacrylate d'alkyle | 0 | 0,1 | 0,5 | 1 | 2 |
| Dolomie | 130 | 130 | 130 | 130 | 130 |
| **PARTIE B.** | | | | | |
| Diisocyanate | 30 | 30 | 30 | 30 | 30 |
| Débullage Partie A | − | + | ++ | ++ | ++ |
| Aspect après coulée | − | + | ++ | ++ | ++ |

− = mauvais

+ = médiocre

++ = bon

**Revendications**

1. Une composition de polyuréthane convenant à la production d'articles en polyuréthane présentant une proportion réduite de bulles incluses, qui comprend, sous forme de constituants séparés devant être mélangés au moment de l'emploi :

(a) un constituant polyol comprenant au moins un diol ou un polyol contenant des unités choisies dans le groupe formé par les unités oxyéthylène et oxypropylène et ayant une fonctionnalité comprise entre 2 et 5 inclusivement, au moins 5% en poids de la totalité du ou des polyol(s) présent(s) dans la composition étant constitués par des unités oxyéthylène, et

(b) un constituant polyisocyanate comprenant au moins un polyisocyanate, caractérisée en ce que le constituant (a) contient de 0,1 à 2% en poids, par rapport à la totalité des polyols présents, d'un polymère ou copolymère d'acrylate d'alkyle constitué à raison d'environ 50 à 100% en poids d'un acrylate d'alkyle dont le radical alkyle linéaire ou ramifié, contient 4 à 12 atomes de carbone et d'environ 0 à 50% en poids d'un acrylate d'alkyle dont le radical alkyle, linéaire ou ramifié, contient 1 à 3 atomes de carbone, et ayant un poids moléculaire compris entre 2500 et 15 000.

2. Composition selon la revendication 1, caractérisée en ce que le constituant polyol est constitué par un mélange de 0 à 100% en poids d'au moins un diol du type polyoxyalkylène copolymérisé avec de l'oxyde d'éthylène, et dont la masse moléculaire est comprise entre 200 et 20 000, et de 0 à 100% en poids d'au moins un polyol ayant une fonctionnalité de plus de 2 à 5, dérivé d'un polyol tel que le glycérol, le triméthylol propane, le 1,2,6-hexane triol, le pentaérythritol, le 1,2,4-butanetriol, le sorbitol, le 4,4'-dihydroxydi phényl-propane, ou d'une diamine aliphatique, cycloaliphatique ou aromatique, et d'oxyde d'alkylène autre que l'oxyde d'éthylène, et copolymérisés ou coiffés avec de l'oxyde d'éthylène, la masse moléculaire du polyol étant comprise entre 200 et 20.000.

3. Composition selon la revendication 1 ou 2, caractérisée en ce que le constituant (a) comprend en outre, entre 0 et 50% en poids d'un allongeur de chaîne appartenant à la catégorie des diols possédant de 3 à 10 atomes de carbone, tels que le butanediol-1,3, l'hexanediol-1,6, à la catégorie des triols tels que la glycérine, le triméthylol propane, l'huile de ricin ou à la catégorie des mono et polyamines primaires et secondaires, aliphatiques, cycloaliphatiques ou aromatiques telles que le 4,4' diamino-diphényl-méthane, les isomères de la diéthyltoluène diamine, et l'éthylène diamine.

4. Articles en polyuréthane fabriqué à partir d'une composition selon l'une quelconque des revendications 1 à 3.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 102 007 (BAYER) <br> * Revendications 1-4,6,9; page 2, lignes 3-16; page 13, ligne 15 - page 14, ligne 19; page 17, ligne 26 - page 18, ligne 6; exemple 1 * | 1-4 | C 08 L 75/08 <br> H 01 B 3/30 // <br> (C 08 L 75/08 <br> C 08 L 33:08 ) |
| A | EP-A-0 156 941 (DOW) <br> * Revendications 1-3,7-10; page 4, lignes 33-37; page 5, lignes 8-16, 33-37; exemples 3,4 * | 1-4 | |
| A | FR-A-2 110 774 (NAPHTACHIMIE) <br> * Revendications 1-4; page 2, lignes 30-38; page 3, lignes 5-22 * | 1 | |

DOMAINES TECHNIQUES
RECHERCHES (Int. Cl.4)

C 08 L
C 08 G

Le présent rapport de recherche a été établi pour toutes les revendications

| Lieu de la recherche | Date d'achèvement de la recherche | Examinateur |
|---|---|---|
| LA HAYE | 09-06-1987 | VAN PUYMBROECK M.A. |